# EUROPEAN PATENT SPECIFICATION

(11) **EP 1 466 784 B1**
(45) Date of publication and mention of the grant of the patent: **18.07.2007**
(21) Application number: 04290924.2
(22) Date of filing: 07.04.2004
(51) Int. Cl.: G01C 21/20, B60Q 3/00, B60R 16/02

(54) **On-vehicle display system**
Fahrzeug Anzeigesystem
Système d'affichage de véhicule

(30) Priority: 08.04.2003 JP 2003104219
(43) Date of publication of application: 13.10.2004
(73) Proprietor: Calsonic Kansei Corporation, Tokyo 164-8602 (JP)
(72) Inventor: Takayama, Hideto, c/o Calsonic Kansei Corp., Tokyo 164-8602 (JP)
(74) Representative: Intes, Didier Gérard André

(56) References cited:
- EP-A- 0 523 918
- EP-A- 0 660 083

## Description

The present invention relates to an on-vehicle display system that conveys information by an image to a user of a motor vehicle.

A conventional on-vehicle display system is disclosed in, for example, Japanese Patent Application No. Tokkaihei 5-18767. This conventional on-vehicle display system includes: color palettes in which color data at least for day and night used in displaying an image to be displayed on a display screen are stored in advance; and a regulating means for regulating color tone by changing the color palettes on the basis of a judgment result (whether it is day or night) obtained from time date.

In the conventional on-vehicle display system, it is possible to change the color tone by changing only the relevant palette when relatively similar colors are displayed on the entire screen as in map display or the like. The conventional on-vehicle display system, however, has a disadvantage, when many colors are used for detailed display, such that even when the change is made with the intention of changing the color tone of only part of a displayed image, the color tone of other parts in which the same color is used is also changed

The disadvantage stated above will be described in more detail below.

In a complicated image that is displayed with the use of the color palette data for day or night in the conventional system, if, for example, part of the color palette data for day or night is changed with the intention of changing color data of a particular section of the image, portions in the same color used in other sections of the image are also subjected to the change. This reason is that the different color palettes with different color data are changed from one to another entirely.

In order to dissolve such a disadvantage by the conventional technique, color palette data for a new state to be displayed is necessary. In this case, the complicated color palette data has a large amount of data as described by EP-A-0 660 083 (Preamble of claim 1). An on-vehicle display system has a run/stop deciding section, a daytime/nighttime deciding section, and a palette control section equipped with a plurality of palette sets. The palettes have color data, respectively, and are changed accordingly to a decision of the deciding sections for shifting display images. Accordingly, a load on an image processing portion of the system becomes large. This has given rise to problems such as the delay in display change processing.

The present invention was made in view of the problems stated above, and an object thereof is to provide an on-vehicle display system capable of changing color data according to vehicle states and demands of a user to enhance visibility while inhibiting the large increase in data amount of a color palette.

An on-vehicle display system according to one of the aspects of the present invention includes: a display unit displaying an image; a palette data storing unit in which a plurality of color data used in the image by the display unit are stored, the palette data storing unit being constituted of a plurality of storage areas corresponding to a plurality of image groups to which the image is divided according to display contents; and a palette data changing unit replacing color data used for displaying an image group with different color data in the storage area corresponding to the image group.

In the above-described on-vehicle display system, when the color tone or the like of a particular image group is to be changed, the palette data changing unit selects different color data stored in advance in the storage area that stores the color data of this image group, thereby re-arranging the palette data for displaying the entire image. Consequently, even when a plurality of display modes are set, it is not necessary to store the palette data for the respective display modes.

Moreover, even when the color tone or the like is changed, the change is limited only to portions in the same color in the same image group and portions in the same color in other image groups are not subjected to the change. This makes it possible to change the color tone or the like according to vehicle driving states and demands of a user to enhance visibility.

Preferably, the on-vehicle display system further includes a sensor detecting and outputting information with reference to one of a state of the motor vehicle and an environment for driving the motor vehicle, and a driving state judging unit judging a vehicle driving state based on the information obtained from the sensor, wherein the palette data changing unit replaces the color data according to the vehicle driving state.

Therefore, even when it is difficult for a driver to read displayed information, the driving state judging unit judges the driving state and then the color data is changed according to the driving state. This enables the display with good visibility even when the driving state changes.

Preferably, the sensor detects to output information with reference to day and night, the driving state judging unit distinguishing the day from the night based on the information obtained from the sensor.

Therefore, the driving state judging unit distinguishes day from night as the driving state to change the color data according to a distinction result of the day/night. This prevents an image from being excessively bright in contrast to ambient darkness and thus too stimulating to a driver, or even when an image is dark and difficult to see due to ambient brightness, the image is made brighter for appropriate display. This enables the display with good visibility even when the driving state of whether the current time is day or night changes.

Preferably, the sensor detects to output information with reference to lights-on and lights-off of one of a side marker lamp and a head lamp.

Therefore, it becomes easier to distinguish day from night at low cost.

Preferably, the sensor is a speed sensor to detect and output information on a vehicle speed of the motor vehicle, and wherein the driving state judging unit judges a driving operation load on a driver of the motor vehicle based on the information about the vehicle speed obtained from the sensor.

Therefore, even when visible time for a driver become shorter and the visual range of a driver is narrowed due to the increase in vehicle speed, which causes a driving operation load on the driver accordingly larger, the driving state judging unit judges the driving load from vehicle speed information to change the contrast of the image. This enables the display with good visibility even when the driving load changes in accordance with the change in vehicle speed.

Preferably, the plural image groups include an image group for character information and an image group for background information, wherein the palette data storing unit stores plural sets of the color data for character information and plural sets of the color data for background information, and wherein the driving state judging unit replaces one of the sets of color data for character information and the sets of color data for background information to change contrast between the character information and the background information. Note that "the character information" in the present invention includes symbols and the like indicating the states and air amount of an air-conditioner.

Therefore, the contrast between the character information and the background is changed, so that visibility of the character information is made appropriate for a driver. This makes it possible to surely convey the contents of the character information to the driver even when the driving load or the driving state changes.

The objects, features and advantages of the present invention will become apparent as the description proceeds when taken in conjunction with the accompanying drawings, in which:
FIG. 1 is a block diagram showing the configuration of an on-vehicle display system of an embodiment according to the present invention;
FIG. 2 is a diagram showing the configuration of a palette data storing unit of the on-vehicle display system of the embodiment;
FIG. 3 is a flowchart showing the flow of processes executed in the on-vehicle display system shown in FIG. 1 in order to change palette data of an image to be displayed according to whether the current time is day or night;
FIG. 4 is a flowchart showing the flow of processes executed in the on-vehicle display system shown in FIG. 1 in order to change palette data of an image to be displayed according to a vehicle speed; and
FIG. 5 is a view showing the relationship between the display contents displayed in the on-vehicle display system shown in FIG. 1 and palette tables of a palette data storing unit.

Hereinafter, an on-vehicle display system according to an embodiment of the present invention will be described with reference to the drawings.

First, the configuration of the on-vehicle display system according to the embodiment of the present invention will be described.

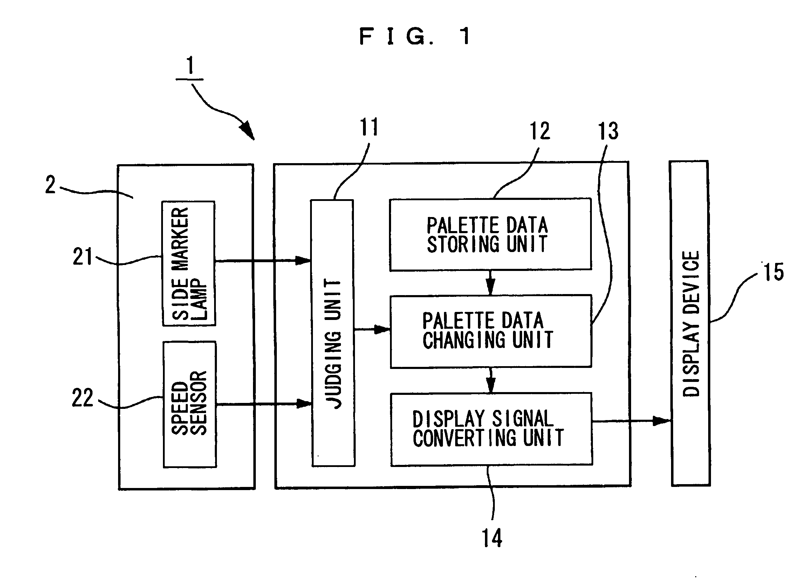

In FIG. 1, FIG. 2, and FIG. 5, the on-vehicle display system 1 includes a display device 15 configured to display an image on its screen, a palette data storing unit 12 in which a plurality of color data used in the image are stored in advance, a judging unit 11 configured to judge a vehicle driving state and a driving operation load on a driver, and a palette data changing unit 13 configured to replace color data used for displaying an image group with different color data in the storage area corresponding to this image group according to a judgment of the judging unit 11.

Note that the display device 15 and the judging unit 11 function as a display unit and a driving state judging unit of the present invention respectively.

The on-vehicle display system 1 is intended for showing images concerning a plurality of on-vehicle devices to be operated by a user on a screen of the display device 15, so that the user can operate the on-vehicle devices watching the images on the screen and using touch switches on the screen. The on-vehicle devices include, a car navigator, audio equipment, an air-conditioner, a telematics device, and the like.

On the images displayed on screen of the display device 15, a main menu, submenus, which are for use in operating the respective on-vehicle devices, and the like, are showed. The image to be displayed is produced by synthesizing an image showing a background group and an image showing a character group which are made independently from each other.

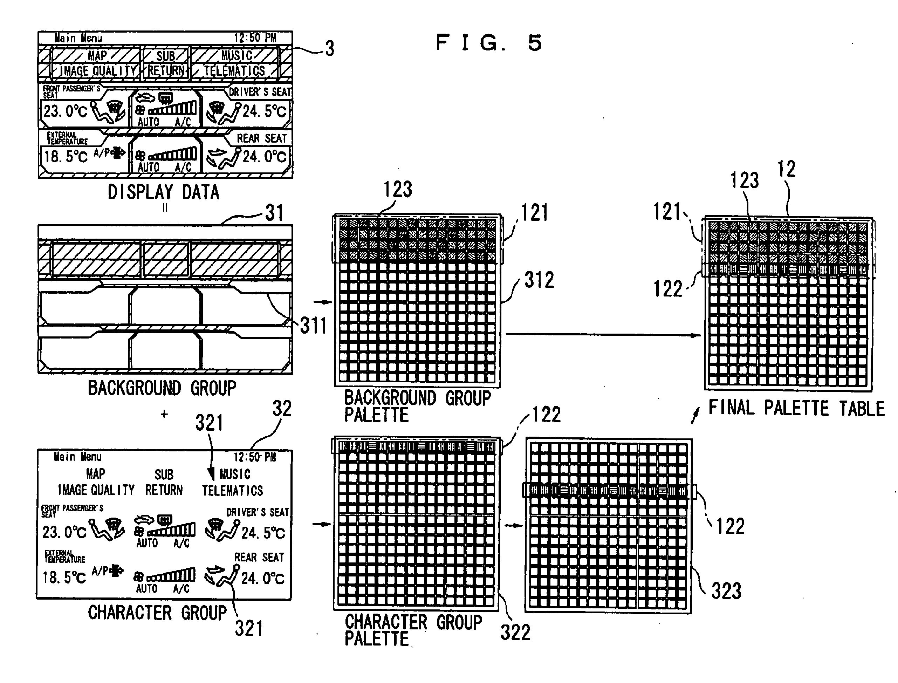

For example, as shown in FIG. 5, when the main menu for operation of the on-vehicle devices is to be displayed, an image 3 thereof is divided into a background group 31 including frames and a character group 32 including characters and symbols. Color data 123 used and color data 123 expected to be used in the background and character groups 31 and 32 are stored in each of palette table blocks 121, 122, and so on, which will be described later.

Here, the palette table blocks 121, 122, and so on function as storage areas of the present invention.

Referring to FIG. 1, the on-vehicle display system 1 is provided with the palette data storing unit 12. The palette data storing unit 12 is constituted of a plurality of storage areas corresponding to a plurality of image groups into which the image is divided according to the display contents.

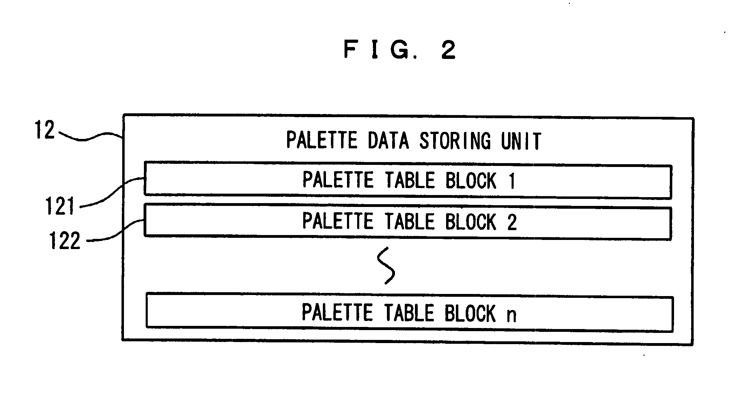

Namely, as shown in FIG. 2, the palette data storing unit 12 is constituted of the plural ("n" pieces of) palette table blocks 121, 122, and so on. As shown in FIG. 5, each of the palette table blocks 121, 122, and so on has a plurality of sets of color data 123 stored therein, the number of the sets being determined as required. The color data 123 are hatched in this FIG. 5 for easy view, but the color data 123 are actually data constituted of the combination of data of the three primary colors.

All the color data 123 in the palette data storing unit 12 are assigned serial index numbers respectively. Namely, the color data 123 are not directly allotted to a frame portion 311 of the background group 31 and characters of the character group 32 which are portions of the image divided according to the image contents, but the index numbers are allotted thereto.

When the image 3 is to be displayed, palette data is first constituted of the color data 123 corresponding to the assigned index numbers, and then the palette data are used in displaying the image 3. The above correspondence data between the image groups and the palette table blocks 121, 122, and so on is stored in advance in the palette data storing unit 12.

Referring to FIG. 1, in response to an output signal from the judging unit 11, the palette data changing unit 13 changes the palette data allotted to the respective portions into which an image to be displayed on the display device 15 is divided according to the image contents.

The palette data changing unit 13 executes processes of changing, for example, the index number "5" corresponding to the color data 123 allotted to the frame portion 311 of the background group 31 of a displayed image to the index number "6" corresponding to the color data 123 allotted to the frame portion 311 of the background group 31 to be changed.

Further, the palette data changing unit 13 generates a palette for an image to be displayed based on the index numbers corresponding to the respective portions into which the changed image is divided according to its contents.

A display signal converting unit 14 uses the generated palette to convert the index numbers to the color data 123 in a unit of each pixel (or each horizontal line) and then sends the converted color data 123 to the display device 15.

The display device 15 displays an image corresponding to the converted color data inputted from the display signal converting unit 14.

The judging unit 11 gives the palette data changing unit 13 an instruction for changing the color data 123. The judging unit 11 receives ON/OFF information (lights-on or lights-off) of a side marker lamp 21 and vehicle speed information respectively from the side marker lamp 21 and a speed sensor 22 that are provided as vehicle-side devices (sensors) 2.

The judging unit 11 judges a driving operation load on a driver based on the distinction result of the day/night, which is derived from the ON/OFF information of the side marker lamp 21, and also based on the vehicle speed information. The judging unit 11 then sends to the palette data changing unit 13 a signal for changing the color data 123 according to the driving operation load.

Next, the operation of the on-vehicle display system 1 of the above-described embodiment will be described.

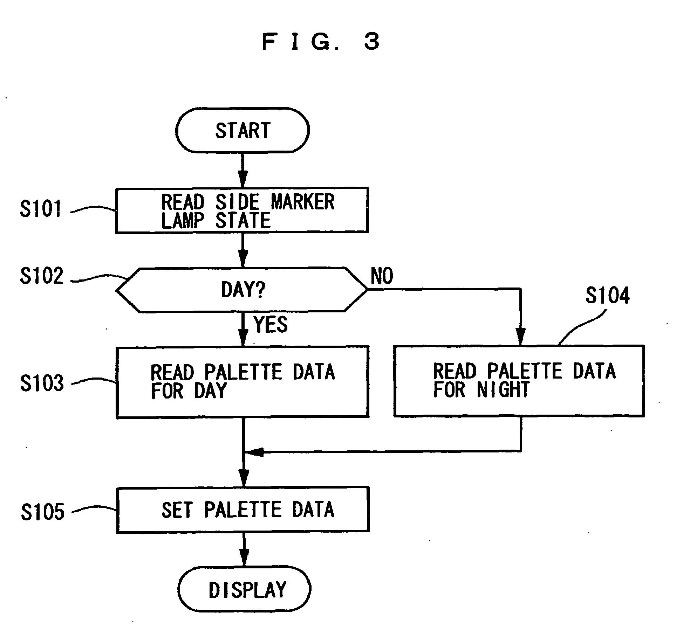

The judging unit 11 of the on-vehicle display system 1 executes the flowchart shown in FIG. 3 in order to execute processes of judging the driving operation load on the driver based on the distinction result of the day/night.

Specifically, at Step S101, the judging unit 11 reads the ON/OFF information from the side marker lamp 21.

At Step S102, if the read ON/OFF information of the side marker lamp 21 indicates that the side marker lamp 21 is OFF (lights-off), the judging unit 11 judges that the current time is day during which the driving operation load on a driver is small. This reason is that the light level (brightness) is high so that the driver can easily see the displayed image on the screen of the display device 15.

Then, the flow goes to Step S103. If the side marker lamp 21 is ON (lights-on), it judges that the current time is night during which the driving operation load is large. This reason is that the light level (brightness) is low so that the driver is hard to easily see the displayed image on the screen of the display device 15. Then, the flow goes to Step S104.

At Step S103, the palette data changing unit 13 makes a change in the index numbers of the palette data so that the palette data of the respective portions to which the image is divided according to the contents are assigned the index numbers for day.

On the other hand, at Step S104, the palette data changing unit 13 makes a change of the index numbers of the palette data so that the palette data of the respective portions to which the image is divided according to the contents are assigned the index numbers for night.

At Step S105, the palette data changing unit 13 creates palette data based on the changed index numbers of the palette data so that the palette data corresponds to the image contents transmittable to the display signal converting unit 14.

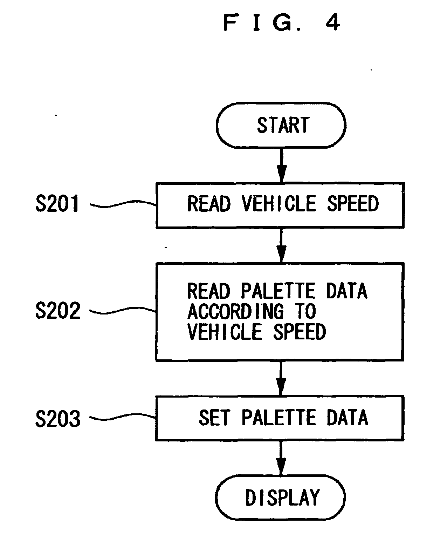

Meanwhile, the judging unit 11 of the on-vehicle display system 1 executes the flowchart shown in FIG. 4 in order to execute processes of judging the driving operation load on the driver based on vehicle speed.

Specifically, at Step S201, the judging unit 11 reads the vehicle speed information from the speed sensor 22.

At Step S202, the driving operation load on the driver is judged based on the vehicle speed. Here, the driving operation load is judged to be higher as the vehicle speed is higher, because the driver becomes harder to see the images on the screen of the display device 15 as higher vehicle speed becomes.

Then, according to the vehicle speed, the palette data changing unit 13 changes the index numbers of the palette data of the respective portions into which the image is divided according to the image contents so that the index numbers appropriate for the vehicle speed are assigned.

At Step S203, based on the changed index numbers of the palette data, the palette data changing unit 13 changes the palette data so that the palette data correspond to the image contents transmittable to the display signal converting unit 14.

Next, in the on-vehicle display system 1 of this embodiment, the contrast of an image is changed to enhance visibility in the following manner.

In the on-vehicle display system 1 of this embodiment, when image data for screen display are prepared, an image is divided in advance into the background group 31 being a base such as a background and the character group 32 showing character portions 321 of the image, and palettes each of which is a set of the color data 123 are set for the respective groups as shown in FIG. 5.

These palettes are stored as the palette table blocks 121, 122, and so on in the palette data storing unit 12. Note that a palette data storing unit 312 of the background group 31 virtually shown for explanation and palette data storing units 322, 323 of the character group 32 virtually shown for explanation are drawn in FIG. 5.

This palette data storing unit 12 stores in advance the correspondence data between the data groups and the palette table blocks 121, 122, and so on. The palette data changing unit 13 changes the index numbers of the palette of only a desired data group based on this information. Thus, the palette data used in an image to be displayed are created by the color data 123 via the index numbers.

The display signal converting unit 14 converts the palette data changed by the palette data changing unit 13 to a signal processable by the display device 15, and an image corresponding to the signal is displayed on the display device 15.

Such a change is made for image display in the above-described manner, so that the color data change by the palette change is made only in an intended image group, so that an image group that is not intended to be changed is not subjected to the change. Therefore, even when many image modes are set to allow contrast change of an image according to various states for enhancing visibility, it is not necessary to store the palette data of the entire image for the respective modes, and the display in many modes according to various state changes is made possible.

The above-described change in the contrast of an image according to the driving operation load is made in the following manner.

First, the contrast change based on the distinction result of the day/night is executed through the processes in the flowchart shown in FIG. 3.

Specifically, if it is judged at Step S102 that the current time is day after the state of the side marker lamp 21 is read at Step S101, the palette of the character group 32 is set to the palette for day in the process at Step S103 in order to prevent the deterioration of visibility due to external light or the like.

On the other hand, if the judging unit 11 judges that the current time is night, the palette of the character group 32 is set to the palette for night in the process at Step S104 along with dimming of backlights of the display device 15 or other process. In this manner, the contrast of the images on the display device 15 becomes less stimulating so as to be appropriate for the ambient darkness. Consequently, display appropriate for the driving state is attained.

Similarly, the contrast change according to the vehicle speed is executed through the processes of the flowchart shown in FIG. 4.

Specifically, the state of the vehicle speed is read at Step S201. Since visibility is worsened in accordance with the increase in vehicle speed, the palette for the character group 32 is changed to be brighter, or the palette for the background group 31 is changed to be darker instead of changing the palette for the character group 32, thereby increasing the contrast of the characters.

In the on-vehicle display system 1 of this embodiment, the contrast between the character group 32 and the background group 31 is changed according to the driving operation load on the driver. Consequently, the contrast between the characters and the background in a displayed image is optimally adjusted according to the driving state.

Next, the advantages of this embodiment will be described.

The on-vehicle display system 1 of this embodiment can bring about the following advantages.

The on-vehicle display system 1 configured to convey information by an image from a device mounted on a vehicle to a user of the vehicle includes, the display device 15 configured to display an image, the palette data storing unit 12 in which the plural color data 123 used in the image by the display device 15 are stored, the palette data storing unit 12 being constituted of the plural palette table blocks 121, 122, and so on corresponding to the plural image groups to which the image is divided according to the display contents, and the palette data changing unit 13 configured to replace the color data 123 used for displaying an image group with the different color data 123 in the palette table block 121, 122, or the like corresponding to this image group.

This on-vehicle display system 1 makes it possible to change the color tone or the like of the display device 15 according to vehicle driving states including the driving operation load on a driver and according to demands of a user to enhance visibility.

Further, the judging unit 11 configured to judge the driving state based on the information from the vehicle side devices 2 is provided to change the contrast of the image according to the driving state. This enables the display with good visibility even when the driving state changes.

Moreover, the judging unit 11 judges the driving state based on the information indicating day or night. This enables the display with good visibility even when the driving state of whether the current state is day or night changes.

The judging unit 11 judges the driving operation load based on the vehicle speed. This enables the display with good visibility according to the change in driving operation load caused by the change in vehicle speed.

The character group 32 and the background group 31 are provided as the plural image groups, and the plural sets of the color data 123 for character information and the plural sets of the color data 123 for background are stored in the palette table blocks 121, 122, and so on of the palette data storing unit 12 in advance, so that the judging unit 11 can replace the sets of color data for character information or the sets of color data for background according to the driving state (including the driving operation load) judged by the judging unit 11.

In this manner, the contrast between the character group 32 and the background group 31 is changed so that visibility of the character information is made appropriate for a driver. This makes it possible to surely convey the contents of the character group 32 to the driver even when the driving state including the driving operation load changes.

In the foregoing, the on-vehicle display system 1 of the present invention has been described based on the embodiment. However, the specific configuration is not limited to the embodiment, and any change, addition, and so on in design are embraced therein without departing from the spirit of the present invention according to the claims.

For example, although a vehicle driving state, including a driving operation load to a driver and the like, is judged based on the side marker lamp 21 and the vehicle speed in this embodiment, the judgment may be based on other information obtained from other sensors. They may be judged based on the steering state, the braking frequency information, ON/OFF information of a head lamp, and the like to change the color tone or the like of the display images.

Alternatively, other factors of changing the driving operation load on a driver or the driving state may be judged.

## Claims

1. An on-vehicle display system (1) configured to convey information by an image (3) from a device mounted on a motor vehicle to a passenger of the motor vehicle, the on-vehicle display system (1) comprising:
a display unit (15) displaying an image (3) ;
a palette data storing unit (12) in which a plurality of color data (123) used in the image by said display unit (15) are stored, the palette data storing unit (12) being constituted of a plurality of storage areas (121,122) corresponding to a plurality of image groups (31,32) to which the image (3) is divided according to display contents; and
a palette data changing unit (13) replacing color data (123) used for displaying an image group (31,32) with different color data (123) in the storage area corresponding to the image group (31,32),
the on-vehicle display system (1) being **characterized in that**
the color data (123) are stored in said palette storing unit (12) with serial index numbers which are assigned to the color data, respectively, and each of the image groups is defined by the serial index numbers representing the color data, wherein
said palette data changing unit (13) changes the color data (123) by changing the serial index numbers of the image group which is being displayed to the serial index numbers of the image group to be displayed.

2. The on-vehicle display system (1) according to claim 1, **characterized in that** it comprises:
a sensor (21,22) detecting and outputting information with reference to one of a state of the motor vehicle and an environment for driving the motor vehicle, and
a driving state judging unit (11) judging a vehicle driving state based on the information obtained from said sensor (21,22),
wherein said palette data changing unit (13) replaces the color data (123) according to the vehicle driving state.

3. The on-vehicle display system (1) according to claim 2,
**characterized in that** said sensor (21,22) detects to output information with reference to day and night,
said driving state judging unit (11) distinguishing the day from the night based on the information obtained from said sensor (21).

4. The on-vehicle display system (1) according to claim 2 or claim 3,
**characterized in that** said sensor (21) detects to output information with reference to lights-on and lights-off of one of a side marker lamp and a head lamp.

5. The on-vehicle display system (1) according to any one of claim 2 to claim 4,
**characterized in that** said sensor (22) is a speed sensor (21) to detect and output information on a vehicle speed of the motor vehicle, and
**in that** said driving state judging unit (11) judges a driving operation load on a driver of the motor vehicle based on the information about the vehicle speed obtained from said speed sensor (22).

6. The on-vehicle display system (1) according to any one of claim 2 to claim 5,
**characterized in that** the plural image groups include an image group (32) for character information and an image group (31) for background information,
**in that** said palette data storing unit (12) stores plural sets of the color data (123) for character information and plural sets of the color data (123) for background information, and
**in that** said driving state judging unit (11) replaces one of the sets of color data (123) for character information and the sets of color data (123) for background information to change contrast between the character information and the background information.

## Patentansprüche

1. Fahrzeugeigenes Anzeigesystem (1), daß dazu ausgelegt ist, Informationen mittels eines Bildes (3) von einer an Bord eines Motorfahrzeuges installierten Vorrichtung an einen Insassen des Motorfahrzeuges zu übermitteln, wobei das fahrzeugeigene Anzeigesystem (1) umfaßt:
eine ein Bild (3) anzeigende Anzeigeeinheit (15),
eine Farbskalendatenspeichereinheit (12), in welcher eine Vielzahl von in dem Bild von der Anzeigeeinheit (15) benutzten Farbdaten (123) gespeichert sind, wobei die Farbskalendatenspeichereinheit (12) aus einer Vielzahl von Speicherzonen (121, 122) gebildet ist, die einer Vielzahl von Bildgruppen (31, 32) entsprechen, in welche das Bild (3) gemäß den Inhalten des Bildes aufgeteilt ist, und
eine Farbskalendatenwechseleinheit (13), die zur Anzeige einer Bildgruppe (31, 32) verwendete Farbdaten (123) mit anderen Farbdaten (123) in dem Speicherbereich entsprechend der Bildgruppe (31, 32) ersetzt,
wobei das fahrzeugeigene Anzeigesystem (1) **dadurch gekennzeichnet ist,**
**daß** die Farbdaten (123) in der Farbskalendatenspeichereinheit (12) mit seriellen Indexnummern gespeichert sind, welche jeweils den Farbdaten zugeordnet werden, wobei jede der Bildgruppen durch die die Farbdaten repräsentierende serielle Indexnummer definiert ist,
wobei die Farbskalendatenwechseleinheit (13) die Farbdaten (123) durch Ändern der seriellen Indexnummer der Bildgruppe, die angezeigt wird, in die serielle Indexnummer der Bildgruppe, die angezeigt werden soll, ändert.

2. Fahrzeugeigenes Anzeigesystem (1) nach Anspruch 1, **dadurch gekennzeichnet, daß** es umfaßt:
einen Sensor (21, 22), der Informationen in bezug auf einen Zustand des Motorfahrzeuges und einer Umgebung zum Fahren des Motorfahrzeuges erfaßt und ausgibt und
einer Fahrzustandsbewertungseinheit (11), welche auf Basis der von dem Sensor (21, 22) erhaltenen Informationen einen Fahrzeugfahrzustand bewertet,
wobei die Farbskalendatenwechseleinheit (13) die Farbdaten (123) entsprechend dem Fahrzeugfahrzustand wechselt.

3. Fahrzeugeigenes Anzeigesystem (1) nach Anspruch 2, **dadurch gekennzeichnet, daß** der Sensor (21, 22) Informationen bezüglich Tag und Nacht erfaßt und ausgibt,
wobei die Fahrzustandsbewertungseinheit (11) Tag und Nacht basierend auf den von dem Sensor (21) erhaltenen Informationen unterscheidet.

4. Fahrzeugeigenes Anzeigesystem (1) nach Anspruch 2 oder 3, **dadurch gekennzeichnet, daß** der Sensor (21) Informationen bezüglich Licht-an und Licht-aus einer seitlichen Markierungslampe oder einer Frontlampe erfaßt und ausgibt.

5. Fahrzeugeigenes Anzeigesystem (1) nach einem der Ansprüche 2 bis 4, **dadurch gekennzeichnet, daß** der Sensor (22) ein Geschwindigkeitssensor (21) ist, der Informationen über eine Fahrzeuggeschwindigkeit des Motorfahrzeuges erfaßt und ausgibt, und
daß die Fahrzustandsbewertungseinheit (11) eine auf einen Fahrer des Motorfahrzeuges durch die Tätigkeit des Fahrens ausgeübte Belastung basierend auf den Informationen über die mittels des Geschwindigkeitssensors (22)erhaltenen Informationen über die Fahrzeuggeschwindigkeit bewertet.

6. Fahrzeugeigene Anzeigevorrichtung (1) nach einen der Ansprüche 2 bis 5,
**dadurch gekennzeichnet,**
**daß** die Vielzahl von Bildgruppen eine Bildgruppe (32) für Zeicheninformationen und eine Bildgruppe (31) für Hintergrundinformationen umfaßt,
**daß** die Farbskalendatenspeichereinheit (12) mehrere Sätze von Farbdaten (123) für Zeicheninformationen und mehrere Sätze von Farbdaten (123) für Hintergrundinformationen speichert und
**daß** die Fahrzustandsbewertungseinheit (11) einen der Sätze der Farbdaten (123) für Zeicheninformationen und der Sätze von Farbdaten (123) für Hindergrundinformationen ersetzt, um den Kontrast zwischen den Zeicheninformationen und den Hintergrundinformationen zu ändern.

## Revendications

1. Système d'affichage de véhicule (1) configuré pour véhiculer des informations par une image (3) depuis un dispositif monté sur un véhicule automobile vers un passager du véhicule automobile, le système d'affichage de véhicule (1) comprenant :
une unité d'affichage (15) qui affiche une image (3) ;
une unité de stockage de données de palette (12), dans laquelle est enregistrée une pluralité de données de couleur (123) qui sont utilisées dans l'image par ladite unité d'affichage (15), l'unité de stockage de données de palette (12) étant constituée d'une pluralité de zones de stockage (121, 122) qui correspondent à une pluralité de groupes d'images (31, 32) entre lesquels l'image (3) est partagée en fonction du contenu d'affichage ; et
une unité de modification de données de palette (13) qui remplace des données de couleur (123) utilisées pour l'affichage d'un groupe d'images (31, 32) par des données de couleurs différentes (123) dans la zone de stockage qui correspond au groupe d'images (31, 32),
le système d'affichage de véhicule (1) étant **caractérisé en ce que** :
les données de couleur (123) sont enregistrées dans ladite unité de stockage de données de palette (12) avec des numéros d'indice de série qui sont attribués aux données de couleur, respectivement ; et
chacun des groupes d'images est défini par les numéros d'indice de série qui représentent les données de couleur,
dans lequel :
ladite unité de modification de données de palette (13) modifie les données de couleur (123) en remplaçant les numéros d'indice de série du groupe d'images qui est en cours d'affichage par les numéros d'indice de série du groupe d'images qui doit être affiché.

2. Système d'affichage de véhicule (1) selon la revendication 1 **caractérisé en ce qu'**il comprend:
un détecteur (21, 22) qui détecte et qui délivre en sortie des informations en rapport avec l'un d'entre un état du véhicule automobile, et un environnement pour conduire le véhicule automobile ; et
une unité de détermination d'état de conduite (11) qui détermine un état de conduite du véhicule sur la base des informations obtenues par le biais dudit détecteur (21, 22),
dans lequel ladite unité de modification de données de palette (13) remplace les données de couleur (123) en fonction de l'état de conduite du véhicule.

3. Système d'affichage de véhicule (1) selon la revendication 2,
**caractérisé en ce que** ledit détecteur (21, 22) accomplit une détection afin de délivrer en sortie des informations en rapport avec le jour et la nuit ;
ladite unité de détermination d'état de conduite (11) fait la différence entre le jour et la nuit sur la base des informations obtenues par le biais dudit détecteur (21).

4. Système d'affichage de véhicule (1) selon la revendication 2 ou 3,
**caractérisé en ce que** ledit détecteur (21) accomplit une détection afin de délivrer en sortie des informations en rapport avec un allumage et une extinction de l'un d'entre des feux de position et des phares.

5. Système d'affichage de véhicule (1) selon l'une quelconque des revendications 2 à 4,
**caractérisé en ce que** ledit détecteur (22) est un détecteur de vitesse (21) qui accomplit une détection afin de délivrer en sortie des informations en rapport avec une vitesse de déplacement du véhicule automobile ; et
**en ce que** ladite unité de détermination d'état de conduite (11) détermine une charge d'une opération de conduite sur un conducteur du véhicule automobile sur la base des informations en rapport avec la vitesse de déplacement au sol du véhicule obtenues par le biais dudit détecteur de vitesse (22).

6. Système d'affichage de véhicule (1) selon l'une quelconque des revendications 2 à 5,
**caractérisé en ce que** la pluralité de groupes d'images comprend un groupe d'images (32) pour des informations de texte et un groupe d'images (31) pour des informations d'arrière-plan ;
**en ce que** ladite unité de stockage de données de palette (12) contient une pluralité d'ensembles de données de couleur (123) pour des informations de texte et une pluralité d'ensembles de données de couleur(123) pour des informations d'arrière-plan ; et
**en ce que** ladite unité de détermination d'état de conduite (11) remplace un des ensembles de données de couleur (123) pour des informations de texte et des ensembles de données de couleur (123) pour des informations d'arrière-plan, dans le but de modifier un contraste entre les informations de texte et les informations d'arrière-plan.
